# EUROPEAN PATENT SPECIFICATION

(11) **EP 1 458 540 B1**
(45) Date of publication and mention of the grant of the patent: **14.07.2010**
(21) Application number: 02787436.1
(22) Date of filing: 15.11.2002
(51) Int. Cl.: B29C 45/04

(54) **METHOD OF MANUFACTURING PREFERABLY PLASTIC PARTS WITH HINGES**
VERFAHREN ZUR HERSTELLUNG VON VORZUGSWEISE KUNSTSTOFFTEILEN MIT GELENKEN
PROCEDE DESTINE A FABRIQUER, DE PREFERENCE, DES OBJETS EN PLASTIQUE A CHARNIERES

(30) Priority: 19.11.2001 DK 200101721
(43) Date of publication of application: 22.09.2004
(73) Proprietor: Gram Technology APS, 3460 Birkerød (DK)
(72) Inventor: GRAM, Jens, DK-3460 Birker d (DK)
(74) Representative: Jensen, Peter Kim
(86) International application number: PCT/DK2002/000770
(87) International publication number: WO 2003/049917

(56) References cited:
- FR-A1- 2 731 983
- US-A- 4 897 032
- US-A- 5 906 841
- US-B1- 6 340 440

## Description

The invention relates to a procedure for molding plastic objects comprising a stationary part and an appendage, e.g. a flip lid, connected with the stationary part by means of a hinge.

US-A-5906841 discloses a mould and a procedure for forming a one-piece flip-top cap having a body portion and a lid portion connected by a hinge. The flip-top cap is moulded in its open position. Thereafter, the mould is opened and a pivotable mould part or closing mechanism containing the lid portion is pivoted to arrange the lid portion on the body portion, i.e. close the cap. Subsequently, the pivotable mould part or closing mechanism is pivoted back into its moulding position. Finally, the cap is ejected from the mould in the open position of the mould. Thus, both the closing of the cap and the ejection thereof take place while the mould is in its open position thereby increasing the total cycle time for forming the closed cap.

FR-A1-2731983 discloses a mould for moulding a tube having a head with a hinged lid for closing an aperture of the head. After moulding of the tube with the lid in its open position, the mould is opened. Thereafter, the lid is moved towards its closed position by laterally pulling two slides. Subsequently, the lid is brought into its closed position by means of a closing mechanism. Finally, the moulded tube with the closed lid is ejected from the mould. The many different steps performed in the open position of the mould increase the required cycle time.

US-B1-6340440 discloses a method for producing a tubular container body having a mouth with a hinged lid. After moulding of the container body with the lid in the open position, the mould is opened and the lid brought into its closed position on the mouth by means of a closing mechanism in the form of an arm, which is moved into engagement with the lid to press it against the mouth. After the arm has been moved back again, the tubular container is ejected from the open mould. The number of required steps to be performed in the open position of the mould increase the cycle time.

US-A-4897032 discloses a mould for forming a cap having a cap body and a hinged lid moulded in an open position. The mould comprising essentially a first mould part being a mould core forming the interior of the cap body, a second mould part for forming a portion of the lid, and a third mould part forming the exterior of the cap body and being provided with a lug extending between the top of the cap body and below the lid in the moulded position of the cap. After moulding of the cap, the mould is opened by moving the second mould part away from the first and third mould part. Thereafter, the mould core is retracted from the third mould part whereby the lid is pivoted about its hinge to an upright position enabling the moulded cap to follow the movement of the mould core. When the mould core has left the third mould part, ejection of the moulded cap is performed. The document does not disclose closing of the lid and performing the above-mentioned steps while the mould is in an open position, which increases cycle time.

The hitherto described procedures and molding tools for the production of plastic objects with in-molded hinges, which are to be closed in the tool, have had various defects and disadvantages. This is tried resolved by the procedure according to the invention. Hereby there is in addition obtained a series of advantages and simplifications of the hitherto known molding- and follow-up-processes, which radically will be able to reduce the total cycle time and consequently the price of the finished objects.

The invention provides as procedure as stated in claim 1.

The turnable middle section of the tool preferably has a cross section, which is designed as a regular polygon, suitably a square. This square conveniently can have the corners rounded, so there will be required less opening of the tool in order to turn the middle section around. For the same reason the middle section can suitably, instead of being a big section, be split up into two or more turnable mold parts. Besides a square or an adjusted square the cross-section of the turnable mold part can be designed as a regular hexagon, an octagon or another preferably regular polygon, where two opposite sides are parallel. In this way there will by the turning arise 2, 4, 6, 8 etc. stations, where/in between where there can exist filling, assembling, ejection and other kinds of handling of the molded objects.

The different applications and advantages by the procedure according to the invention are mentioned further under the description to the drawing, where
fig. 1 shows a tool according to the invention seen from above in closed condition in the first station,
fig. 2 shows the same in open condition still in the first station,
fig. 3 shows the same in open condition during the turning towards the second station,
fig. 4 shows the same in open condition situated in the second station,
fig. 5 shows the same in closed condition at the second station,
fig. 6 shows a principle sketch of another tool according to the invention seen from above, and
fig. 7 shows a principle sketch of a third tool according to the invention, where there at the same time is molded from two opposite placed sides as in a sandwich tool.

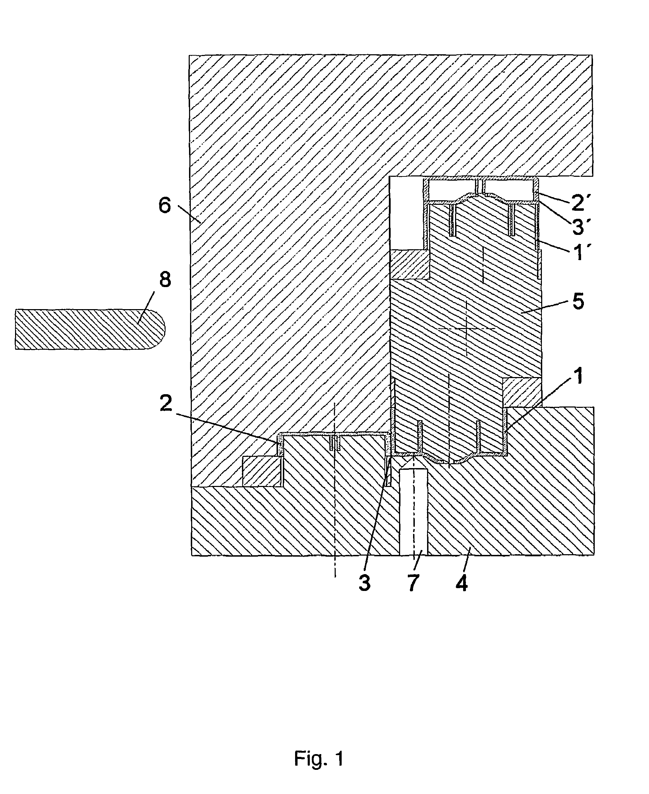

In fig. 1 is shown a tool seen from above in closed condition with two molded objects, each comprising a stationary part (1) and (1'), which is connected with a movable part, here being made out of a flip lid (2) and (2'), which in one end has a hinge (3) and (3'), that also is connected to the stationary part (1) and (1'). The lowest placed object has just been molded in the tool between its stationary part (4) and the turnable middle section (5) as well as the movable mold-part (6). The uppermost object is completely finish-molded and ready for ejection, just as it is remarked, that the flip lid (2') of the uppermost object and its belonging hinge (3') are closed firmly on the stationary part (1'). Contrary to this the on the lowest object just molded flip lid (2) with its belonging hinge (3) is situated in fully opened condition, that is in an angle of 180 degrees in relation to the stationary part (1) due to mold technical considerations. On the figure is furthermore shown the movable mold part (6), an inlet channel (7) in the stationary mold part (4), plus the special closing mechanism (8), here shown in withdrawn position.

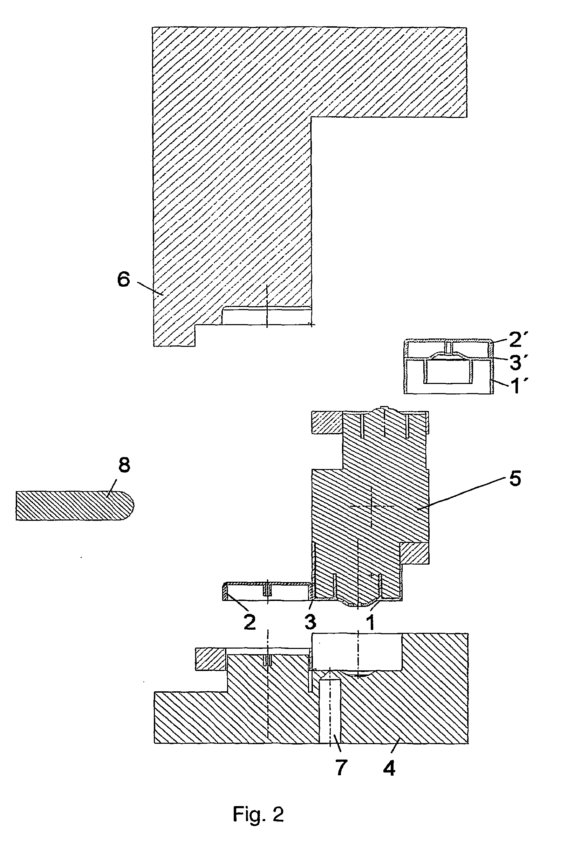

Fig. 2 shows the same tool open, whereby the finished object with the now in a closed condition placed flip lid (2') with its belonging hinge (3') just has been ejected from the turnable middle section (4). The stationary part (1) of the molded object is still firmly placed on the turnable middle section (5), while the movable part with its flip lid (2) with its belonging hinge (2) still is in the position in which it was molded.

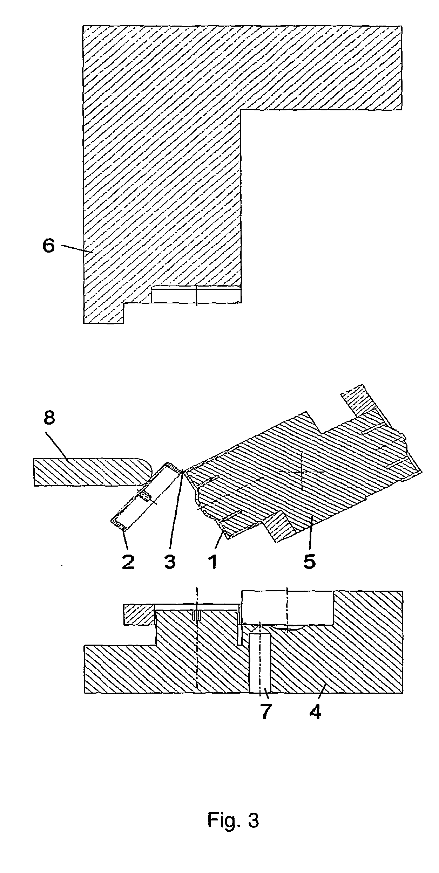

Fig. 3 shows the same tool still open, but where the turnable middle section (5) is during turning. The special closing mechanism (8) is hereby driven forward until contact with the flip lid (2), which hereby is turned around with the hinge (3) about to be closed against the stationary part (1) of the object.

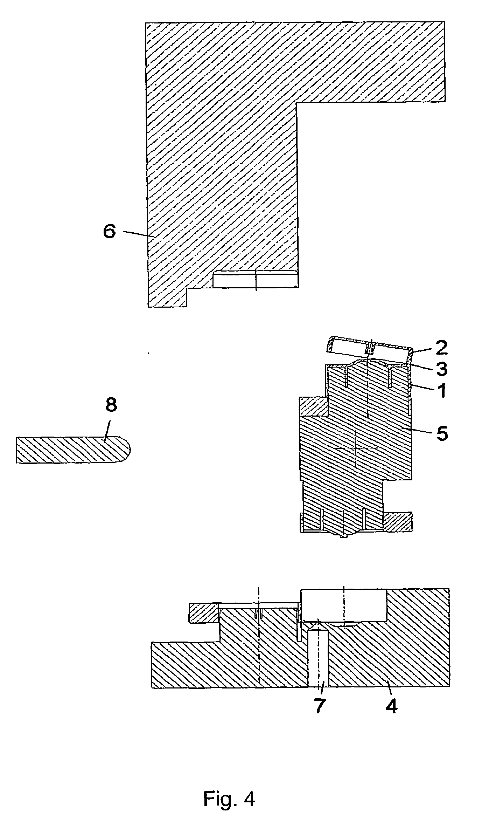

In fig. 4 the turnable middle section (5) of the same tool has arrived to the next station, still with the tool in open position. The special closing mechanism (8) is back against its start position outside the space between the two mold-parts (4) and (6). The flip lid (2) is now closed almost completely down against the stationary part (1) of the object.

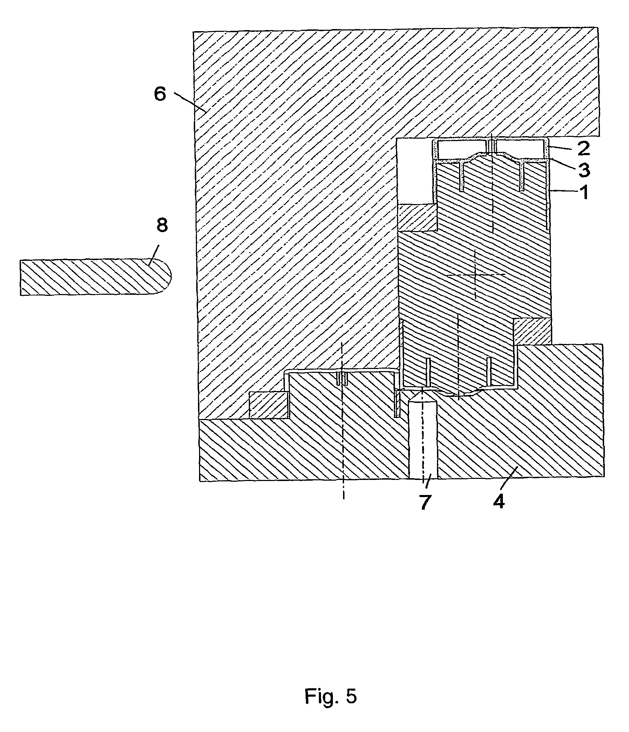

On fig. 5 is seen the same tool in closed condition after the completion of a total molding cycle. Seen in comparison with fig. 1 the turnable middle section (5) is turned 180 degrees forward from its start position. The lowest mold cavity is now formed between the stationary mold part (4) on one side and the turnable mold part (5) and the movable mold part (6) on the other side, and is ready for receiving a new portion of molding material through the inlet (7). The uppermost object now has got the flip lid (2) closed firmly against the stationary part (1) of the object by assistance of the closing movement of the tool and is now ready for being ejected, when the tool opens again, when a new cycle takes its beginning as the tunable middle section (5) is turned further forward against its start position.

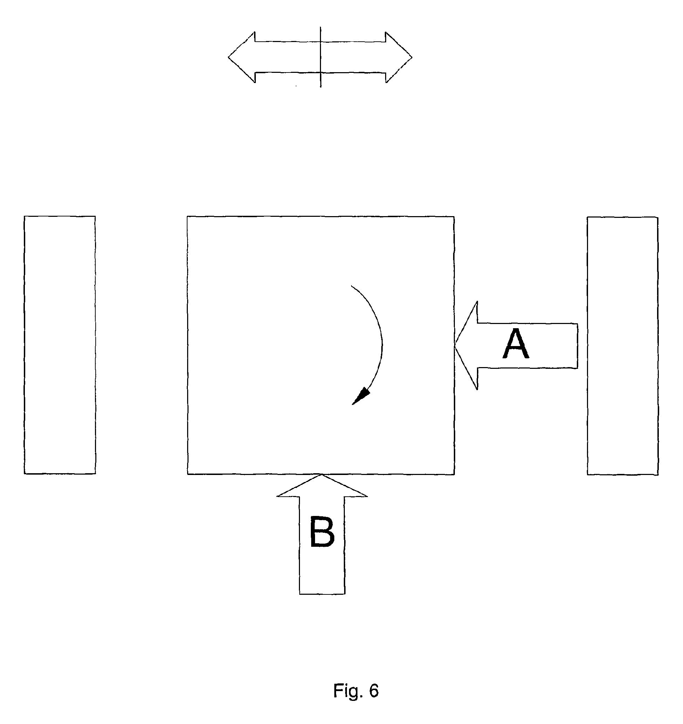

Fig. 6 shows a principle sketch of another design of a tool , where the closing of the movable part of the object against the stationary part of the object takes place in the position named as B, e.g. by means of a robot or another closing mechanism, which is not shown on the figure, at the same time as the tool is closed and occupied in molding a new object in the position named as A.

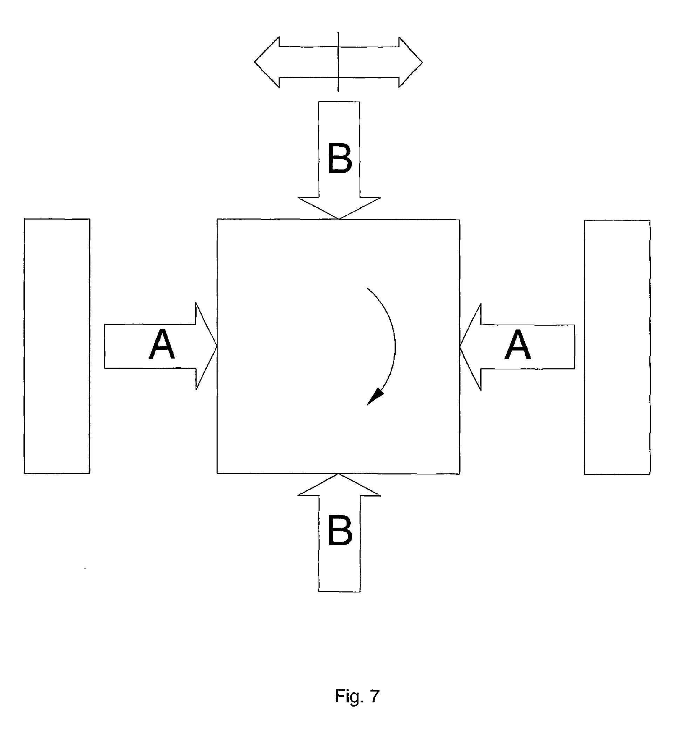

Fig. 7 shows a principle sketch of a third design of a tool, where there here with the mold closed are molded from two opposite placed sides as in a sandwich tool in the two positions named as A, simultaneously with, both on the top and on the bottom of the figure by means of robots or other closing mechanisms, which are not shown at the figure, are taken care of that the two-simultaneously molded objects movable and stationary part are closed firmly against each other in the two positions named as B.

## Claims

1. Procedure for moulding plastic objects comprising a stationary part (1) and an appendage, e.g. a flip lid (2) connected to the stationary part (1) by means of a hinge (3) and moveable between an open position and a closed position, said procedure comprising the following steps:
- providing a moulding tool having a turnable middle section (5)
- moulding the object in the open position thereof in a first moulding station of the moulding tool
- turning the turnable middle section towards a further station of the moulding tool while maintaining the moulded object in the turnable middle section, and
- during or after the turning of the turnable middle section (5) and at the latest during an ejection of the moulded object from the moulding tool moving the lid into the closed position in one or more stages by means of at least one closing mechanism (8).

2. Procedure as mentioned in claim 1, wherein the closing mechanism (8) acts on the moulded object to close the latter while the turnable middle section (5) turns from one station to another.

3. Procedure as in claim 1 or claim 1 and one or more of the other claims mentioned, wherein the mechanism (8) is situated linear movable in relation to the movable middle section (5), and the force from the turning of the middle section is used for moving the hinge (3) and its appendage, e.g. the flip lid (2) to the closed position.

4. Procedure as in claim 1 or claim 1 and one or more of the other claims mentioned, wherein the closing of the hinge (3) and the flip tid (2) on the stationary part (1) of the object takes place in two stages by first closing the hinge (3) with its belonging flip lid (2) partly by means of the mechanism (8), and then providing a final closing by pressing the flip lid (2) firmly on the stationary part of the object (1) before the ejection of the object from the moulding tool.

5. Procedure as in claim 1 or claim 1 and one or more of the other claims mentioned, wherein the final closing of the hinge (3) with its flip lid (2) on the stationary part of the object (1) takes place in connection with the ejection of the object from the tool by utilising the force from the ejection systerm.

6. Procedure as in claim 1 or claim 1 and one or more of the other claims mentioned, wherein the final closing of the hinge (3) with its flip lid (2) on the stationary part of the object (1) takes place in connection with a closing movement of the tool, whereupon the ejection of the closed object occurs when the tool opens again.

7. Procedure as in claim 1 or claim 1 and one or more of the other claims mentioned, wherein the closing of the hinge (3) with its flip lid (2) takes place in a position, which is positioned in an angle with the closing direction of the tool that amounts to 90 degrees, 60 degrees and/or 120 degrees.

8. Procedure as in claim 1 or claim 1 and one or more of the other claims mentioned, wherein the closing of the hinge (3) with its flip lid (2) takes place in a sandwich tool on two opposite placed sides of the turnable middle-section (5), where a moulding does not take place.

9. Procedure as in claim 1 or claim 1 and one or more of the other claims mentioned, wherein in the closed position of the moulding tool objects are moulded from two opposite positioned sides as in a sandwich tool, at the same time as there in the same cycle on at least two preferably opposite placed sides by means of closing mechanisms occurs a closing of the moulded objects.

## Patentansprüche

1. Verfahren zum Formen von Kunststoffgegenständen, die einen unbeweglichen Teil (1) und einen Ansatz, zum Beispiel einen Klappdeckel (2), aufweisen, der mit dem unbeweglichen Teil (1) mittels eines Gelenks (3) verbunden und zwischen einer offenen Position und einer geschlossen Position bewegbar ist, wobei das Verfahren die folgenden Schritte umfasst:
- Bereitstellen eines Formwerkzeugs mit einem drehbaren Mittelabschnitt (5)
- Formen des Gegenstands in der offenen Position desselben in einer ersten Formstation des Formwerkzeugs
- Drehen des drehbaren Mittelabschnitts hin zu einer weiteren Station des Formwerkzeugs, während der geformte Gegenstand weiter in dem drehbaren Mittelabschnitt gehalten wird, und,
- während des Drehens oder nach dem Drehen des drehbaren Mittelabschnitts (5) und spätestens während eines Auswerfens des geformten Gegenstands aus dem Formwerkzeug, Bewegen des Deckels in die geschlossene Position in einer oder mehreren Stufen mittels zumindest eines Schließmechanismus (8).

2. Verfahren nach Anspruch 1, wobei der Schließmechanismus (8) auf den geformten Gegenstand einwirkt, um diesen zu schließen, während sich der drehbare Mittelabschnitt (5) von einer Station zur nächsten dreht.

3. Verfahren nach Anspruch 1 oder Anspruch 1 und einem oder mehreren der übrigen Ansprüche, wobei der Mechanismus (8) in Bezug auf den beweglichen Mittelabschnitt (5) linear beweglich angeordnet ist und die Kraft aus dem Drehen des Mittelabschnitts zum Bewegen des Gelenks (3) und dessen Ansatzes, zum Beispiel des Klappdeckels (2), in die geschlossene Position genutzt wird.

4. Verfahren nach Anspruch 1 oder Anspruch 1 und einem oder mehreren der übrigen Ansprüche, wobei das Schließen des Gelenks (3) und des Klappdeckels (2) an dem unbeweglichen Teil (1) des Gegenstands in zwei Stufen erfolgt, indem zuerst das Gelenk (3) mit dessen zugehörigem Klappdeckel (2) mittels des Mechanismus (8) teilweise geschlossen wird und dann durch festes Drücken des Klappdeckels (2) auf den unbeweglichen Teil des Gegenstands (1) vor Auswurf des Gegenstands aus dem Formwerkzeug für ein abschließendes Schließen gesorgt wird.

5. Verfahren nach Anspruch 1 oder Anspruch 1 und einem oder mehreren der übrigen Ansprüche, wobei das abschließende Schließen des Gelenks (3) mit dessen Klappdeckel (2) an dem unbeweglichen Teil des Gegenstands (1) in Verbindung mit dem Auswerfen des Gegenstands aus dem Werkzeug unter Ausnutzung der Kraft des Auswurfsystems erfolgt.

6. Verfahren nach Anspruch 1 oder Anspruch 1 und einem oder mehreren der übrigen Ansprüche, wobei das abschließende Schließen des Gelenks (3) mit dessen Klappdeckel (2) an dem unbeweglichen Teil des Gegenstands (1) in Verbindung mit einer Schließbewegung des Werkzeugs erfolgt, woraufhin der Auswurf des geschlossenen Gegenstands erfolgt, wenn sich das Werkzeug wieder öffnet.

7. Verfahren nach Anspruch 1 oder Anspruch 1 und einem oder mehreren der übrigen Ansprüche, wobei das Schließen des Gelenks (3) mit dessen Klappdeckel (2) in einer Position erfolgt, die in einem Winkel zu der Schließrichtung des Werkzeugs positioniert ist, der sich auf 90 Grad, 60 Grad und/oder 120 Grad beläuft.

8. Verfahren nach Anspruch 1 oder Anspruch 1 und einem oder mehreren der übrigen Ansprüche, wobei das Schließen des Gelenks (3) mit dessen Klappdeckel (2) in einem Sandwich-Werkzeug an zwei einander gegenüber platzierten Seiten des drehbaren Mittelabschnitts (5) erfolgt, wo kein Formen stattfindet.

9. Verfahren nach Anspruch 1 oder Anspruch 1 und einem oder mehreren der übrigen Ansprüche, wobei in der geschlossenen Position des Formwerkzeugs Gegenstände wie bei einem Sandwich-Werkzeug von zwei einander gegenüber positionierten Seiten geformt werden, während gleichzeitig im selben Zyklus an zumindest zwei vorzugsweise einander gegenüber platzierten Seiten mittels Schließmechanismen ein Schließen der geformten Gegenstände erfolgt.

## Revendications

1. Procédé de moulage d'objets en plastique comprenant une partie fixe (1) et un appendice, par exemple un couvercle rabattable (2) relié à la partie fixe (1) au moyen d'une charnière (3) et mobile entre une position ouverte et une position fermée, ledit procédé comprenant les étapes suivantes :
fournir un outil de moulage ayant une section médiane rotative (5),
mouler l'objet dans sa position ouverte dans un premier poste de moulage de l'outil de moulage,
faire tourner la section médiane rotative vers un autre poste de l'outil de moulage tout en maintenant l'objet moulé dans la section médiane rotative, et
durant ou après la rotation de la section médiane rotative (5) et au plus tard durant une éjection de l'objet moulé de l'outil de moulage, déplacer le couvercle dans la position fermée en une ou plusieurs étapes au moyen d'au moins un mécanisme de fermeture (8).

2. Procédé selon la revendication 1, dans lequel le mécanisme de fermeture (8) agit sur l'objet moulé pour fermer celui-ci alors que la section médiane rotative (5) tourne d'un poste à un autre.

3. Procédé selon la revendication 1 ou la revendication 1 et une ou plusieurs revendications parmi les autres revendications mentionnées, dans lequel le mécanisme (8) est situé d'une manière mobile linéairement par rapport à la section médiane mobile (5), et la force de la rotation de la section médiane est utilisée pour déplacer la charnière (3) et son appendice, par exemple le couvercle rabattable (2) à la position fermée.

4. Procédé selon la revendication 1 ou la revendication 1 et une ou plusieurs revendications parmi les autres revendications mentionnées, dans lequel la fermeture de la charnière (3) avec son couvercle rabattable (2) sur la partie fixe de l'objet (1) a lieu en deux étapes en fermant d'abord la charnière (3) avec son couvercle rabattable correspondant (2) partiellement au moyen du mécanisme (8), et en fournissant ensuite une fermeture finale en appuyant le couvercle rabattable (2) fermement sur la partie fixe de l'objet (1) avant l'éjection de l'objet de l'outil de moulage.

5. Procédé selon la revendication 1 ou la revendication 1 et une ou plusieurs revendications parmi les autres revendications mentionnées, dans lequel la fermeture finale de la charnière (3) avec que son couvercle rabattable (2) sur la partie fixe de l'objet (1) a lieu conjointement à l'éjection de l'objet de l'outil en utilisant la force du système d'éjection.

6. Procédé selon la revendication 1 ou la revendication 1 et une ou plusieurs revendications parmi les autres revendications mentionnées, dans lequel la fermeture finale de la charnière (3) avec son couvercle rabattable (2) sur la partie fixe de l'objet (1) a lieu conjointement à un mouvement de fermeture de l'outil, après quoi l'éjection de l'objet fermé a lieu quand l'outil s'ouvre à nouveau.

7. Procédé selon la revendication 1 ou la revendication 1 et une ou plusieurs revendications parmi les autres revendications mentionnées, dans lequel la fermeture de la charnière (3) avec son couvercle rabattable (2) a lieu dans une position, qui est positionnée selon un angle avec la direction de fermeture de l'outil qui s'élève à 90°, 60° et/ou 120°.

8. Procédé selon la revendication 1 ou la revendication 1 et une ou plusieurs revendications parmi les autres revendications mentionnées, dans lequel la fermeture de la charnière (3) avec son couvercle rabattable (2) a lieu dans un outil de moulage sandwich sur deux côtés placés de manière opposée de la section médiane rotative (5), quand un moulage n'a pas lieu.

9. Procédé selon la revendication 1 ou la revendication 1 et une ou plusieurs revendications parmi les autres revendications mentionnées, dans lequel dans la position fermée de l'outil de moulage, les objets sont moulés à partir de deux côtés positionnés de manière opposée comme dans un outil de moulage sandwich, en même temps dans le même cycle sur au moins deux côtés placés de manière préférablement opposée au moyen de mécanisme de fermeture a lieu une fermeture des objets moulés.
